(19) Europäisches Patentamt
European Patent Office
Office européen des brevets

(11) Veröffentlichungsnummer: **0 351 661 B1**

(12) **EUROPÄISCHE PATENTSCHRIFT**

(45) Veröffentlichungstag der Patentschrift: **08.01.92 Patentblatt 92/02**

(51) Int. Cl.[5]: **B01J 23/64**, B01J 23/56, B01J 23/46, C07C 209/72

(21) Anmeldenummer: **89112401.8**

(22) Anmeldetag: **07.07.89**

(54) **Ruthenium-Trägerkatalysator, seine Herstellung und sein Einsatz bei der Herstellung von gegebenenfalls substituiertem Cyclohexylamin und gegebenenfalls substituiertem Dicyclohexylamin.**

(30) Priorität: **21.07.88 DE 3824822**

(43) Veröffentlichungstag der Anmeldung: **24.01.90 Patentblatt 90/04**

(45) Bekanntmachung des Hinweises auf die Patenterteilung: **08.01.92 Patentblatt 92/02**

(84) Benannte Vertragsstaaten: **BE CH DE FR GB IT LI NL**

(56) Entgegenhaltungen:
**EP-A- 0 001 425**
**EP-A- 0 324 983**
**EP-A- 0 324 984**

(56) Entgegenhaltungen:
**US-A- 2 887 449**
**US-A- 3 983 072**
**US-A- 4 161 492**
**US-A- 4 206 134**

(73) Patentinhaber: **BAYER AG**
**W-5090 Leverkusen 1 Bayerwerk (DE)**

(72) Erfinder: **Immel, Otto, Dr.**
**Immenhofweg 26**
**W-4150 Krefeld (DE)**
Erfinder: **Schwarz, Hans-Helmut, Dr.**
**Rather Strasse 90**
**W-4150 Krefeld (DE)**
Erfinder: **Thiel, Reinhard, Dr.**
**Buschstrasse 215a**
**W-4150 Krefeld (DE)**

EP 0 351 661 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

## Beschreibung

Die Erfindung betrifft einen Ruthenium-Trägerkatalysator, ein Verfahren zu seiner Herstellung und ein Verfahren zur Herstellung von gegebenenfalls substituiertem Cyclohexylamin und gegebenenfalls substituiertem Dicyclohexylamin durch katalytische Hydrierung von gegebenenfalls substituiertem Anilin unter Einsatz eines solchen Katalysators.

Es ist bekannt, Cyclohexylamin durch Druckhydrierung von Anilin herzustellen. Für diese Hydrierung werden Kobalt-Katalysatoren, die einen basischen Zusatz enthalten (GB 969542), sowie Raney-Kobalt (JP 68/03180) eingesetzt. Nach US 3.636.108 wird zur Kernhydrierung aromatischer Aminoverbindungen ein mit Alkali moderierter Ruthenium-Katalysator auf einem inerten Trägermaterial verwendet, wobei man zusätzlich $NH_3$ und gegebenenfalls ein Lösungsmittel einsetzt. Ein weiteres Verfahren zur Druckhydrierung von Anilin zu Cyclohexylamin ist in DE-AS 1106319 beschrieben, bei dem ebenfalls eine Ruthenium-Katalysator verwendet wird. In diesem Verfahren wird mitentstehendes Dicyclohexylamin dem Einsatzmaterial wieder zugesetzt ; das Verfahren bringt beträchtliche Verluste durch die gleichzeitige Entstehung von Cyclohexan. EP 53818 hält schließlich Palladium-Trägerkatalysatoren zur Druckhydrierung von Anilin für güngstiger als Ruthenium-Katalysatoren.

Bei den bekannten Druckhidrierungsverfahren von Anilin entsteht das Dicyclohexylamin neben dem Cyclohexylamin lediglich als Nebenprodukt. Um Dicyclohexylamin in größeren Mengen zu erhalten, wird es nach separaten Verfahren hergestellt. So kann es beispielsweise durch Druckhydrierung von Diphenylamin unter Verwendung eines Ruthenium-$Al_2O_3$-Katalysators gewonnen werden (DE-AS 1106319). Weiterhin entsteht Dicyclohexylamin bei der Umsetzung von Cyclohexanon mit Cyclohexylamin in Gegenwart von Palladium auf Kohle bei einem Wasserstoffdruck von 4 bar (FR 1.333.693). In einem umständlichen Verfahren kann Dicyclohexylamin aus dem Hydrierprodukt des Anilins an einem Nickelkatalysator durch fraktioniertes Auskondensieren gewonnen werden. Aus dem zurückbleibenden Gemisch wird ein Teil des mitentstandenen Ammoniaks entfernt und der Rest wieder in die Reaktion zurückgeführt (DE-PS 805518).

Im Verfahren von EP 324983 wird Anilin zu einem Gemisch von Mono- und Dicyclohexylamin hydriert. Hierbei wird ein Ru-Cr-Mn-Katalysator auf $Al_2O_3$ eingesetzt. Die anfangs steuerbare Menge von Mono- zu Dicyclohexylamin, um dem Bedarf zu entsprechen, wird nach längerer Betriebszeit immer starrer, so daß nach etwa 5000 h der Gehalt an Dicyclohexylamin nicht mehr unter 10% gedrückt werden kann. Zudem ist der Umgang mit dem Katalysator (Herstellung, Einfüllen, Entsorgung) wegen der Giftigkeit des Chroms problematisch.

Im Verfahren von EP 324984 wird Anilin in der Gasphase an einem Ru und Pd sowie basische Alkalimetallverbindungen enthaltenden Katalysator hydriert. Auch dieses Verfahren ist ungeeignet, wenn der Bedarf an Monocyclohexylamin hoch ist, also das Zwangskoppelprodukt Dicyclohexylamin weitgehend unterdrückt werden soll. Zudem ist die Raum-Zeit-Ausbeute, bedingt durch das Arbeiten in der Gasphase, niedrig. Durch das erforderliche Verdampfen und Kondensieren sind weiterhin die Energiekosten hoch.

Ein gemeinsames Problem vieler Verfahren zur Kernhydrierung aromatischer Amine besteht in der zum Teil beträchtlichen Bildung von Cyclohexan als nicht weiter verwendbarem Abfallprodukt.

Es bestand daher der Wunsch, ein neues, auch in technischem Maßstab brauchbares Verfahren zu entwickeln, nach welchem in einer Reaktionsstufe sowohl Cyclohexylamin als auch Dicyclohexylamin in einem gewünschten Mengenverhältnis hergestellt werden können, in welchem der Verlust durch die Bildung von Cyclohexan zurückgedrängt wird und in welchem weiterhin die Standzeit des verwendeten Katalysators verbessert ist.

Überraschenderweise wurde nun gefunden, daß die genannten Anforderungen durch den Einsatz des im folgenden gekennzeichneten Ruthenium-Trägerkatalysators erfüllt werden, der einen Verbindungen von seltenen Erdmetallen (III. Nebengruppe des Periodensystems der Elemente) und des Mangans enthaltenden $Al_2O_3$-Träger besitzt.

Die Erfindung betrifft demnach einen Ruthenium-Katalysator auf einem mit Verbindungen von seltenen Erdmetallen (III. Nebengruppe des Periodensystems der Elemente) und des Mangans behandelten $Al_2O_3$-Träger, wobei die Behandlung des Trägers mit Verbindungen der seltenen Erdmetalle und des Mangans bis zu einem Gehalt von zusammen 0,05 bis 8 Gew.-%, bezogen auf das Gesamtgewicht des Katalysators, geführt wird, das Gewichtsverhältnis der seltenen Erden zum Mangan auf 5 : 1-1 : 5 eingestellt wird und der Rutheniumgehalt 0,05-5 Gew.-%, bevorzugt 0,05-3 Gew.-%, besonders bevorzugt 0,1-2 Gew.-% bezogen auf das Gesamtgewicht des Katalysators, beträgt.

Der erfindungsgemäße Katalysator enthält als Träger $Al_2O_3$, welches mit Verbindungen von seltenen Erdmetallen (III. Nebengruppe des Periodensystems der Elemente) und des Mangans behandelt worden ist. Als $Al_2O_3$ kommen insbesondere die $\alpha$- und die $\gamma$-Modifikation, besonders bevorzugt die $\gamma$-Modifikation, in Frage. Der Träger weist einen Gehalt an seltenem Erdmetall und Mangan von zusammen 0,05-8 Gew.-%, bevorzugt 0,2-5 Gew.-%, bezogen auf das Gesamtgewicht des Katalysators auf. Das Gewichtsverhältnis von seltenem

Erdmetall zu Mangan beträgt 5 : 1-1 : 5, bevorzugt 10 : 9-1 : 2. Als seltene Erdmetalle werden die Elemente der III. Nebengruppe des Periodensystems, wie Scandium, Yttrium, Lanthan und die Lanthaniden verstanden. In bevorzugter Weise werden Yttrium, Lanthan, Cer, Prasedoym, Neodym und Dysprosium, in besonders bevorzugter Weise Cer und Lanthan und in ganz besonders bevorzugter Weise Cer verstanden. Das Cer kann hierbei mit anderen Lanthaniden, beispielsweise mit Lanthan, Praseodym, Neodym, Dysprosium, oder mit Yttrium vergesellschaft sein. Eine solche Vergesellschaftung ist dem Fachmann im übrigen für alle genannten seltenen Erdmetalle geläufig.

Zur Herstellung des erfindungsgemäßen Katalysators kann so vorgegangen werden, daß auf ein $Al_2O_3$ in Form von Strangpreßlingen, Pillen oder Kugeln mit Abmessungen von etwa 2-10 mm Verbindungen der seltenen Erdmetalle und des Mangans aufgebracht werden, der so beaufschlagte Träger nach dem Trocknen auf 200-450°C erhitzt wird und anschließend mit einer Lösung eines Rutheniumsalzes getränkt oder besprüht wird, wonach sich eine erneute Trocknungsphase anschließt.

Das Aufbringen von Verbindungen der seltenen Erdmetalle und des Mangans auf den Katalysatorträger kann beispielsweise durch bloßes Tränken oder Sprühen mit geeigneten Salzen der seltenen Erdmetalle und des Mangans erfolgen, woran sich eine Trocknungsphase und die genannte Erhitzungsphase bei 200-450°C anschließen. Hierbei werden die Salze der seltenen Erdmetalle und des Mangans in fest auf dem Katalysatorträger haftende Verbindungen übergeführt. Das Aufbringen von Verbindungen der seltenen Erdmetalle und des Mangans kann jedoch auch durch gemeinsames Ausfällen eines Seltenerd-Mangan-Hydroxidgemisches aus Seltenerd- und Mangansalzen auf dem Träger mit Alkalilauge oder Ammoniak und gegebenenfalls anschließendes Auswaschen der löslichen Anteile mit Wasser erfolgen. Als Seltenerd- und Mangansalze kommen insbesondere die Sulfate, Chloride, Acetate und/oder Nitrate der genannten Elemente in Betracht.

Nach dem Aufbringen der Seltenerd- und Manganverbindungen und gegebenenfalls nach der beschriebenen Ausfällung (und der damit verbundenen Auswaschung wasserlöslicher Verbindungen) wird der so behandelte Träger zunächst getrocknet, bevor er auf höhere Temperaturen (etwa 200-450°C, bevorzugt 250-430°C) erhitzt wird. Dieses Erhitzen erfolgt in einer Zeit von 1-120 Stunden. Während dieser Zeit kann die Temperatur im angegebenen Bereich von niederen auf höhere Werte erhöht werden.

Nach der beschriebenen Temperung wird der mit Verbindungen der seltenen Erdmetalle und des Mangans beaufschlagte Katalysatorträger mit einer Ruthenium enthaltenden Lösung getränkt. Hierbei kann so vorgegangen werden, daß das Ruthenium, beispielsweise in Form wäßriger Lösungen des Chlorids, Nitrats, Acetats oder eines anderen geeigneten Salzes auf den Träger aufgetränkt oder aufgesprüht wird, gefolgt von einer Trocknung. Man kann jedoch auch vor der Trocknung den mit Ruthenium getränkten Träger mit einer Lösung der obengenannten basischen Verbindung behandeln, wobei das Ruthenium als Oxid oder Hydroxid ausfällt. Auch hier schließt sich eine Trocknung an. Danach steht ein solcher erfindungsgemäßer Katalysator grundsätzlich zum Einsatz zur Verfügung. In bevorzugter Weise wird er jedoch vor seinem Einsatz, besonders bevorzugt nach Anordnung im Hydrierreaktor, durch Behandlung mit Wasserstoff bei einer Temperatur von 150-350°C aktiviert. Nach oder vor der Aktivierung kann es wünschenswert sein, Anionen wie Chlorid, Nitrat, Acetat oder andere und gegebenenfalls die Kationen der zur Ausfällung benutzten basischen Verbindungen durch eine Wasserwäsche zu entfernen.

Man kann jedoch auch den mit Verbindungen der seltenen Erdmetalle und des Mangans beaufschlagten Katalysatorträger zunächst mit der Lösung einer der genannten basischen Verbindungen tränken, anschließend trocknen und auf den so vorbehandelten, basisch eingestellten Katalysatorträger Lösungen von Rutheniumsalzen auftragen, wobei im Moment der Tränkung auch die Ausfällung des Rutheniums in Form seines Oxids oder Hydroxids erfolgt. Auch hierbei ist nach einer abschließenden Trocknung der Katalysator grundsätzlich einsatzbereit, kann jedoch bevorzugt in der beschriebenen Weise vorab mit Wasserstoff bei der genannten Temperatur aktiviert werden.

Ein zur Fällung des Rutheniums als Oxid oder Hydroxid mit basischen Verbindungen beaufschlagter Katalysator ist grundsätzlich in Gegenwart der Reste solcher alkalischer Verbindungen betriebsbereit. In bevorzugter Weise wird jedoch die beschriebene Wasserwäsche vorgenommen.

Die Tränkung oder das Besprühen des $Al_2O_3$-Trägers mit den genannten Stoffen und die hierfür erforderlichen Arbeitsgeräte sind dem Fachmann bekannt ; ebenso bekannt ist die Einstellung der gewünschten Beaufschlagung durch die Wahl der Menge und Konzentration der Lösungen der genannten Elemente.

Die erfindungsgemäßen Katalysatoren können in hervorragender Weise zur Kernhydrierung von gegebenenfalls substituierten Anilinen unter erhöhtem Druck eingesetzt werden. In besonders überraschender Weise läßt sich unter Verwendung der erfindungsgemäßen Katalysatoren in Abhängigkeit von der Hydriertemperatur die Menge des dabei mitentstehenden Dicyclohexylamins gegenüber dem Monocyclohexylamin verändern, wodurch eine gezielte Herstellung von Dicyclohexylamin in größeren Mengen möglich wird. Die erfindungsgemäßen Katalysatoren zeigen gegenüber einem nicht mit Verbindungen der seltenen Erdmetalle und des Mangans hergestellten reinen Ruthenium-Trägerkatalysator die für kontinuierliche technische Prozesse

erforderliche hohe Standzeit.

Damit ist erfindungsgemäß ein Verfahren zur Herstellung eines Gemisches von gegebenenfalls substituiertem Cyclohexylamin und gegebenenfalls substituiertem Dicyclohexylamin durch Hydrierung von gegebenenfalls substituiertem Anilin mit Wasserstoff in Gegenwart des oben beschriebenen Katalysators möglich, bei welchem man im Bereich von 80-240°C, bevorzugt 100-200°C, bei einem Druck von 50-500 bar, bevorzugt 100-400 bar, besonders bevorzugt 150-350 bar, arbeitet.

Erfindungsgemäß kann die Menge des gewünschten Dicyclohexylamins durch Variation der Temperatur erreicht werden, wobei höhere Hydriertemperaturen einem höheren Anteil an Dicyclohexylamin entsprechen und umgekehrt. So erhält man beispielsweise bei einer Reaktionstemperatur in der Nähe von etwa 100°C nur bis zu etwa 4 Gew.-% Dicyclohexylamin im Gemisch der kernhydrierten Amine, während bei Hydriertemperaturen im Bereich von etwa 200°C die hydrierten Amine in einer Menge von bis zu mehr als 50% in Form des Dicyclohexylamins vorliegen können.

Die Hydrierung an den erfindungsgemäßen Katalysatoren kann diskontinuierlich oder kontinuierlich, für technische Zwecke in bevorzugter Weise kontinuierlich vorgenommen werden ; hierbei arbeitet man mit einer fest angeordneten Katalysatorschüttung in der Rieselphase. Als Katalysatorbelastung wird eine Menge von 0,05-2 kg, bevorzugt 0,1-1 kg, besonders bevorzugt 0,15-0,6 kg Anilin pro Liter Katalysator pro Stunde eingestellt. Eine geringe Veränderung des erzielten Anteils an Dicyclohexylamin durch veränderte Aktivität des Katalysators im Laufe längerer Reaktionsperioden kann durch ein geringes Nachstellen der Reaktionstemperatur oder der anderen Parameter ausgeglichen werden. Diese Verhältnisse können anhand der Analytik des Reaktionsgemisches verfolgt werden.

Als Einsatzmaterialien kommen im Sinne der folgenden Reaktionsgleichung Anilin und substituierte Aniline in Betracht, die zu den korrespondierenden Cyclohexylaminen und Dicyclohexylaminen umgesetzt werden :

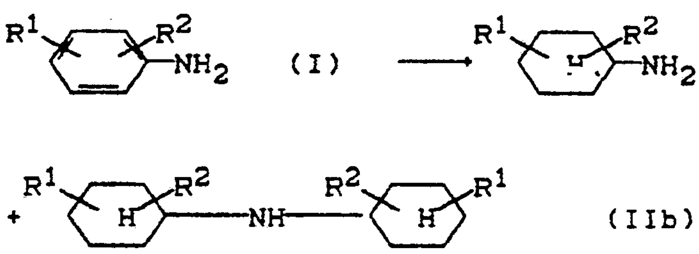
(I) (IIa)
+ (IIb)

Die Reste $R^1$ und $R^2$ haben unabhängig voneinander die Bedeutung von Wasserstoff, $C_1$-$C_4$-Alkyl oder $C_1$-$C_4$-Alkoxy. Beispiele für die genannten Alkyl bzw. Alkoxysubstituenten sind : Methyl, Ethyl, Propyl, Isopropyl, Butyl, Isobutyl, Methoxy, Ethoxy, Propoxy, Isopropoxy, Butoxy oder Isobutoxy. In bevorzugter Weise haben die genannten Substituenten 1-2 C-Atome, besonders bevorzugt handelt es sich um Methyl bzw. Methoxy. In weiterhin bevorzugter Weise hat einer der Substituenten $R^1$ und $R^2$ die Bedeutung Wasserstoff, während der andere Substituent Alkyl bzw. Alkoxy im genannten Umfang bedeutet.

In besonders bevorzugter Weise richtet sich das Verfahren auf die Kernhydrierung von nicht substituiertem Anilin.

Cyclohexylamine und Dicyclohexylamine des genannten Bedeutungsumfanges finden Verwendung zur Herstellung von Alterungsschutzmitteln für Kautschuke und Kunststoffe, als Korrosionsschutzmittel, sowie als Vorprodukte für Pflanzenschutzmittel und Textilhilfsmittel.

<u>Beispiel 1</u>

200 g eines handelsüblichen $\gamma$-$Al_2O_3$ mit einer spezifischen Oberfläche von 350 $m^2/g$ und einem Kugeldurchmesser von 2 bis 6 mm wurden mit einer Lösung getränkt, die aus
12,4 g $Ce(NO_3)_3 \cdot 6\ H_2O$,
18,28 g $Mn(NO_3)_2 \cdot 4\ H_2O$ und
50 g Wasser
hergestellt worden war. Das getränkte $Al_2O_3$ wurde im Wasserstrahlvakuum 18 Stunden bei 120°C getrocknet und anschließend 3 Stunden lang bei 400°C getempert. Der so hergestellte Katalysatorträger wurde mit 70 g einer wäßrigen $RuCl_3$-Lösung getränkt, die 2 g Ru enthielt. Der feuchte Katalysator wurde im Wasserstrahlvakuum 18 Stunden bei 120°C getrocknet und 3 Stunden im Wasserstoffstrom (100 l $H_2/h$) bei 350°C aktiviert.

Beispiel 2

25 ml (19 g) des nach Beispiel 1 hergestellten Katalysators wurden zur Anilinhydrierung in einem 250 ml-Schüttelautoklaven verwendet, der im Inneren mit einem zentral gelagerten, fest mit dem Autoklaven verbundenen Siebkorb ausgestattet war, in den der Katalysator gefüllt wurde. Mit dieser Katalysatorfüllung wurden je 50 g Anilin unter einem Wasserstoffdruck von 280 bar bei verschiedenen Temperaturen hydriert. Die Hydrierzeit betrug bei allen Versuchen dieser Serie 3 Stunden. Die Hydrierprodukte wurden gaschromatographisch analysiert und zeigten in Abhängigkeit von der Hydriertemperatur folgende Zusammensetzung :

| | | | |
|---|---|---|---|
| Temperatur (°C) | 200 | 160 | 110 |
| Dicyclohexylamin (%) | 58,3 | 7,6 | 3,6 |
| Nebenprodukte (%) | 0,3 | 0,2 | 0,1 |
| Cyclohexylamin (%) | Rest | Rest | Rest |

Beispiel 3

In weiteren Hydrierversuchen wurden 60 ml (51,3 g) des in Beispiel 1 hergestellten Katalysators in ein senkrecht angeordnetes Druckrohr (Durchmesser 14 mm, Länge 70 cm) gebracht, das mit einem Ölthermostat beheizt wurde. Die Temperatur wurde an mehreren Meßstellen überprüft. Der mittlere Wert wurde jeweils angegeben. Etwaige Heißstellen oberhalb der ersten Meßstelle konnten nicht registriert werden. Das Zwischenkornvolumen wurde mit feinem Seesand (0,2 bis 0,3 mm) ausgefüllt. Bei 280 bar wurden Anilin und Wasserstoff von oben auf den Katalysator geleitet. Die Flüssigkeit rieselte über den Katalysator nach unten in einen Abscheider. Am Kopf des Abscheiders wurden stündlich 20 l Wasserstoff entspannt. Der Anilindurchsatz entsprach eine Katalysatorbelastung von 0,25 bis 0,27 g Anilin/ml Kat. × h und wurde konstant gehalten.

Das Hydrierprodukt wurde in regelmäßigen Zeitabständen aus dem Abscheider entnommen und analysiert. Dabei ergab sich folgende Produktzusammensetzung in Abhängigkeit von der Laufzeit und der Reaktionstemperatur bei einer Versuchsdauer von mehr als 16 Monaten :

| Laufzeit (h) | Temp. (°C) | DHA *) (%) | CHA*) (%) | Nebenprodukte (%) |
|---|---|---|---|---|
| 164 | 188 | 64,0 | 35,5 | 0,5 |
| 283 | 107 | 4,3 | 95,6 | 0,1 |
| 1069 | 190 | 65,9 | 33,5 | 0,6 |
| 1729 | 111 | 4,4 | 95,4 | 0,2 |
| 2278 | 190 | 64,8 | 34,6 | 0,6 |
| 5925 | 180 | 64,6 | 34,6 | 0,8 |
| 7262 | 110 | 4,3 | 95,6 | 0,1 |
| 8506 | 110 | 4,2 | 95,7 | 0,1 |
| 10065 | 201 | 53,6 | 45,8 | 0,6 |
| 11608**) | 200 | 61,3 | 38,1 | 0,6 |
| 11702**) | 111 | 3,3 | 96,6 | 0,1 |
| 11845 | 191 | 68,7 | 30,6 | 0,7 |

*) DHA = Dicyclohexylamin; CHA = Cyclohexylamin

**) In der Zeitspanne von 11 400 und 11 700 Betriebsstunden wurde die Hydrierung bei einer Katalysatorbelastung von 0,4 g/ml Kat. x h durchgeführt.

Beispiel 4

In einem weiteren Hydrierversuch wurden 1000 ml (800 g) eines gemäß Beispiel 1 hergestellten Katalysators in ein senkrecht angeordnetes Druckrohr (Durchmesser 40 mm, Länge 110 cm) gebracht, dessen Temperatur geregelt werden konnte. Bei 280 bar wurden Anilin und Wasserstoff von oben auf den Katalysator geleitet. Die Flüssigkeit rieselte über den Katalysator, wobei die Hydrierung stattfand. Ab Kopf des Flüssigkeitsabscheiders wurden stündlich 200 l Wasserstoff entspannt. Die kontinuierlich eingespeiste Anilinmenge entsprach einer Katalysatorbelastung von 0,21 bzw. 0,41 g Anilin/ml Kat. x h. Bei stationären Reaktionsbedingungen ergab sich folgende Produktzusammensetzung in Abhängigkeit von der Hydriertemperatur :

| | | |
|---|---|---|
| Temperatur (°C) | 190-200 | 170-180 |
| Dicyclohexylamin (%) | 34,3 | 23,2 |
| Nebenprodukte (%) | 0,3 | 0,2 |
| Cyclohexylamin (%) | Rest | Rest |
| Katalysatorbel. (g/ml h) | 0,41 | 0,21 |

Beispiel 5

200 g eines handelsüblichen $\gamma$-$Al_2O_3$ mit einer spezifischen Oberfläche von 350 $m^2/g$ und einem Kugeldurchmesser von 2-6 mm wurden mit einer Lösung getränkt, die aus
12,4 g $Ce(NO_3)_3 \cdot 6\ H_2O$,
18,28 g $Mn(NO_3)_2 \cdot 4\ H_2O$ und
60 g Wasser
hergestellt wurde. Das getränkte $Al_2O_3$ wurde anschließend mit 79 g einer 10%igen Ammoniaklösung vermischt. Der so behandelte Katalysatorträger wurde in fließendem Wasser nitratfrei gewaschen. Der Katalysatorträger wurde zunächst 3 Stunden bei 90°C getrocknet und anschließend 3 Stunden bei 400°C getempert.

Der getemperte Katalysatorträger wurde mit 60 g einer wäßrigen $RuCl_3$-Lösung getränkt, die 2 g Ruthenium enthielt. Dann erfolgte eine stufenweise Trocknung: zunächst 3 Stunden bei 90°C und danach bis zur Gewichtskonstanz bei 120°C. Der so hergestellte Katalysator wurde 3 Stunden bei 200°C im Wasserstoffstrom (100 1$H_2$/h) aktiviert.

60 ml (50,8 g) des so hergestellten Katalysators wurden für die kontinuierliche Anilinhydrierung in ein Druckrohrgefüllt, und es wurde nach der in Beispiel 3 beschriebenen Weise verfahren. Bei einem Wasserstoffdruck von 280 bar wurde wieder eine Katalysatorbelastung von 0,25 g Anilin/ml Kat. × h eingestellt. Unter stationären Reaktionsbedingungen wurde folgende Produktzusammensetzung erhalten :

| Temperatur (°C) | 187 | 110 |
|---|---|---|
| Dicyclohexylamin (%) | 59,02 | 2,90 |
| Nebenprodukte (%) | 0,16 | 0,05 |
| Cyclohexylamin (%) | 40,82 | 97,05 |

Beispiel 6

200 g eines handelsüblichen $\gamma$-$Al_2O_3$ mit einer spezifischen Oberfläche von 350 $m^2/g$ und einem Kugeldurchmesser von 2-6 mm wurden mit einer Lösung getränkt, die aus
12,5 g $La(NO_3)_3 \cdot 6\ H_2O$
18,3 g $Mn(NO_3)_2 \cdot 4\ H_2O$ und
50 g Wasser
hergestellt wurde. Das getränkte $Al_2O_3$ wurde getrocknet und 3 Stunden bei 400°C getempert. 50 g des so hergestellten Katalysatorträgers wurden mit 70 g einer wäßrigen $RuCl_3$-Lösung, die 0,5 g Ruthenium enthielt, getränkt und anschließend bei 120°C getrocknet. Schließlich wurde der Katalysator 2 Stunden bei 250°C im Wasserstoffstrom (100 l $H_2$/h) reduziert.

25 ml (20,5 g) des so hergestellten Katalysators wurden in der in Beispiel 2 beschriebenen Weise zur Hydrierung von 50 g Anilin eingesetzt. Der Wasserstoffdruck betrug ebenfalls 280 bar. Die Hydrierprodukte wurden gaschromatographisch analysiert und zeigten in Abhängigkeit von der Hydriertempeatur folgende Zusammensetzung :

| Temperatur (°C) | 200° | 160 | 120 |
|---|---|---|---|
| Dicyclohexylamin (%) | 40 | 7,3 | 3,9 |
| Nebenprodukte (%) | 0,25 | 0,25 | <0,1 |
| Cyclohexylamin (%) | Rest | Rest | Rest |

**Patentansprüche**

1. Ruthenium-Katalysator auf einem mit Verbindungen von seltenen Erdmetallen (III. Nebengruppe des

Periodensystems der Elemente) und des Mangans behandelten $Al_2O_3$-Träger, wobei die Behandlung des Trägers mit Verbindungen der seltenen Erdmetalle und des Mangans bis zu einem Gehalt von zusammen 0,05-8 Gew.%, bezogen auf das Gesamtgewicht des Katalysators, geführt wird, das Gewichtsverhältnis der seltenen Erdmetalle zum Mangan auf 5 : 1-1 : 5 eingestellt wird und der Rutheniumgehalt 0,05 bis 5 Gew.%, bezogen auf das Gesamtgewicht des Katalysators, beträgt.

2. Katalysator nach Anspruch 1, dadurch gekennzeichnet, daß als seltene Erdmetalle Yttrium, Lanthan, Cer, Praseodym, Neodym und Dysprosium verstanden werden.

3. Katalysator nach Anspruch 2, dadurch gekennzeichnet, daß als seltene Erdmetalle Cer und Lanthan verstanden werden.

4. Katalysator nach Anspruch 3, dadurch gekennzeichnet, daß als seltenes Erdmetall Cer verstanden wird.

5. Katalysator nach Anspruch 1, dadurch gekennzeichnet, daß der $Al_2O_3$-Träger nach der Beaufschlagung mit Verbindungen der seltenen Erdmetalle und des Mangans auf 200 bis 450°C erhitzt wird und dann das Ruthenium aufgetragen wird.

6. Verfahren zur Herstellung eines Gemisches von gegebenenfalls substituiertem Cyclohexylamin und gegebenenfalls substituiertem Dicyclohexylamin durch die Hydrierung von gegebenenfalls substituiertem Anilin mit Wasserstoff in Gegenwart eines Ruthenium-Katalysators, dadurch gekennzeichnet, daß man einen Ruthenium-Katalysator auf einem mit Verbindungen von seltenen Erdmetallen (III. Nebengruppe des Periodensystems der Elemente) und des Mangans behandelten $Al_2O_3$-Träger, wobei die Behandlung des Trägers mit Verbindungen der seltenen Erdmetalle und des Mangans bis zu einem Gehalt von zusammen 0,05 bis 8 Gew.-%, bezogen auf das Gesamtgewicht des Katalysators, geführt wird, das Gewichtsverhältnis der seltenen Erdmetalle zum Mangan auf 5 : 1-1 : 5 eingestellt wird und der Rutheniumgehalt 0,05-5 Gew.-%, bezogen auf das Gesamtgewicht des Katalysators, beträgt, einsetzt und bei 80 bis 240°C unter höherem Druck arbeitet.

7. Verfahren nach Anspruch 6, dadurch gekennzeichnet, daß man zur Erhöhung des Anteils an Dicyclohexylamin eine höhere Temperatur innerhalb des Bereiches von 80-240°C einstellt.

8. Verfahren nach Anspruch 6, dadurch gekennzeichnet, daß man eine Katalysatorbelastung von 0,05-2 kg, bevorzugt 0,1-1 kg, besonders bevorzugt 0,15-0,6 kg Anilin pro Liter Katalysator und Stunde einstellt.

9. Verfahren nach Anspruch 6, dadurch gekennzeichnet, daß man ein Anilin der Formel

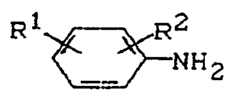

einsetzt, in der

$R^1$ und $R^2$ unabhängig voneinander Wasserstoff, $C_1$-$C_4$-Alkyl oder $C_1$-$C_4$-Alkoxy bedeuten.

## Claims

1. Ruthenium catalyst which is supported on $Al_2O_3$ treated with compounds of rare earth metals (subgroup III of the periodic system of the elements) and of manganese, the treatment of the support with compounds of rare earth metals and of manganese being carried out to give a total content of 0.05-8% by weight, relative to the total weight of the catalyst, and the ratio by weight of the rare earth metals to manganese being adjusted to 5 : 1-1 : 5, the ruthenium content being 0.05 to 5% by weight, relative to the total weight of the catalyst.

2. Catalyst according to Claim 1, characterized in that rare earth metals are understood to mean yttrium, lanthanum, cerium, praseodymium, neodymium and dysprosium.

3. Catalyst according to Claim 2, characterized in that rare earth metals are understood to mean cerium and lanthanum.

4. Catalyst according to Claim 3, characterized in that the rare earth metal is understood to mean cerium.

5. Catalyst according to Claim 1, characterized in that, after being charged with compounds of the rare earth metals and of manganese, the $Al_2O_3$ support is heated at 200 to 450°C and then the ruthenium is applied.

6. Process for the preparation of a mixture of optionally substituted cyclohexylamine and optionally substituted dicyclohexylamine by hydrogenating optionally substituted aniline by means of hydrogen in the presence of a ruthenium catalyst, characterized in that a ruthenium catalyst which is supported on $Al_2O_3$ treated with compounds of rare earth metals (subgroup III of the periodic system of the elements) and of manganese the treatment of the support with compounds of rare earth metals and of manganese being carried out to give a total content of 0.05 to 8% by weight, relative to the total weight of the catalyst, and the ratio by weight of the rare earth metals to manganese being adjusted to 5 : 1-1 : 5, the ruthenium content being 0.05-5% by weight,

relative to the total weight of the catalyst, is employed and the process is carried out at 80 to 240°C under elevated pressure.

7. Process according to Claim 6, characterized in that the temperature is adjusted to a higher value within the range from 80-240°C in order to increase the proportion of dicyclohexylamine.

8. Process according to Claim 6, characterized in that the catalyst loading is adjusted to 0.05-2 kg, preferably 0.1-1 kg and particularly preferably 0.15-0.6 kg of aniline per litre of catalyst and hour.

9. Process according to Claim 6, characterized in that an aniline of the formula

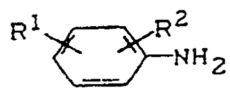

in which

$R^1$ and $R^2$ independently of one another denote hydrogen, $C_1$-$C_4$-alkyl or $C_1$-$C_4$-alkoxy is employed.

## Revendications

1. Catalyseur au ruthénium fixé sur un support de $Al_2O_3$ traité avec des composés de métaux des terres rares (sous-groupe III du Système Périodique des Eléments) et de manganèse, le traitement du support avec des composés de métaux des terres rares et de manganèse étant effectué jusqu'à une teneur de 0,05 à 8% en poids par rapport au poids total de catalyseur, le rapport du poids des métaux des terres rares au poids du manganèse étant réglé à une valeur de 5 : 1 à 1 : 5 et la teneur en ruthénium s'élevant à 0,05-5% en poids, par rapport au poids total du catalyseur.

2. Catalyseur suivant la revendication 1, caractérisé en ce qu'on considère comme métaux des terres rares l'yttrium, le lanthane, le cérium, le praséodyme, le néodyme et le dysprosium.

3. Catalyseur suivant la revendication 2, caractérisé en ce qu'on considère comme métaux des terres rares le cérium et le lanthane.

4. Catalyseur suivant la revendication 3, caractérisé en ce qu'on considère le cérium comme métal des terres rares.

5. Catalyseur suivant la revendication 1, caractérisé en ce que le support d'alumine est chauffé à 200-450°C après avoir été chargé de composés de métaux des terres rares et de composés de manganèse, puis le ruthénium est appliqué.

6. Procédé de production d'un mélange de cyclohexylamine éventuellement substituée et de dicyclohexylamine éventuellement substituée par l'hydrogénation d'aniline éventuellement substituée, avec de l'hydrogène en présence d'un catalyseur au ruthénium, caractérisé en ce qu'on utilise un catalyseur au ruthénium sur un support de $Al_2O_3$ traité avec des composés de métaux des terres rares (sous-groupe III du Système Périodique des Eléments) et de composés de manganèse, le traitement du support étant effectué avec des composés des métaux des terres rares et des composés du manganèse jusqu'à une teneur conjointe de 0,05 à 8% en poids par rapport au poids total de catalyseur, le rapport du poids des métaux des terres rares au poids du manganèse est réglé à une valeur de 5 : 1 à 1 : 5 et la teneur en ruthénium s'élève à 0,05-5% en poids par rapport au poids total de catalyseur, et on opère sous pression élevée à une température de 80 à 240°C.

7. Procédé suivant la revendication 6, caractérisé en ce qu'on règle une température élevée dans la plage de 80 à 240°C pour accroître la proportion de dicyclohexylamine.

8. Procédé suivant la revendication 6, caractérisé en ce qu'on établit une capacité du catalyseur de 0,05 à 2 kg, de préférence de 0,1 à 1 kg, notamment de 0,15 à 0,6 kg d'aniline par litre de catalyseur et par heure.

9. Procédé suivant la revendication 6, caractérisé en ce qu'on utilise une aniline de formule

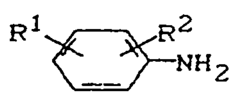

dans laquelle

$R^1$ et $R^2$ représentent, indépendamment l'un de l'autre, l'hydrogène, un groupe alkyle en $C_1$ à $C_4$ ou un groupe alkoxy en $C_1$ à $C_4$.